(19) Europäisches Patentamt
European Patent Office
Office européen des brevets

(11) EP 3 981 909 A2

(12) EUROPEAN PATENT APPLICATION

(43) Date of publication:
**13.04.2022 Bulletin 2022/15**

(21) Application number: **21200839.5**

(22) Date of filing: **05.10.2021**

(51) International Patent Classification (IPC):
***D06P 1/16*** *(2006.01)* ***D06P 1/52*** *(2006.01)*
***D06P 1/613*** *(2006.01)* ***D06P 3/54*** *(2006.01)*
***D06P 3/60*** *(2006.01)* ***D06P 3/82*** *(2006.01)*
***D06P 5/00*** *(2006.01)* ***D06P 5/28*** *(2006.01)*
***D06P 5/20*** *(2006.01)* ***D06P 5/30*** *(2006.01)*
***B41M 5/00*** *(2006.01)* ***C09D 11/54*** *(2014.01)*

(52) Cooperative Patent Classification (CPC):
**D06P 1/16; B41M 5/0017; C08G 63/672; C09D 11/54; C09D 167/02; C09D 171/02; D06P 1/5271; D06P 1/613; D06P 3/54; D06P 3/6033; D06P 3/8233; D06P 5/002; D06P 5/005; D06P 5/2077; D06P 5/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.10.2020 JP 2020169159**

(71) Applicant: **KONICA MINOLTA, INC.**
**Tokyo 100-7015 (JP)**

(72) Inventors:
- **NITO, Ken**
**Tokyo, 100-7015 (JP)**
- **OKADA, Takuya**
**Tokyo, 100-7015 (JP)**
- **NAKAMURA, Masaki**
**Tokyo, 191-8511 (JP)**

(74) Representative: **Gille Hrabal Partnerschaftsgesellschaft mbB Patentanwälte**
**Brucknerstraße 20**
**40593 Düsseldorf (DE)**

# (54) PRETREATMENT LIQUID, PRETREATED FABRIC AND METHOD FOR PRODUCING THE SAME, INK SET, AND IMAGE FORMING METHOD

(57) Provided is a pretreatment liquid for dyeing a fabric with an inkjet ink containing a dispersible dye. The pretreatment liquid contains a block copolymer including a hydrophobic block derived from a hydrophobic resin having an SP value of less than 11 and a hydrophilic block derived from a hydrophilic resin having an SP value of 11 or more, and water. The difference between the SP values of the hydrophobic resin and the hydrophilic resin is 1.0 or more.

EP 3 981 909 A2

## Description

## BACKGROUND OF THE INVENTION

### 1. Field of the Invention

The present invention relates to a pretreatment liquid, a pretreated fabric and a method for producing the pretreated fabric, an ink set, and an image forming method.

### 2. Description of Related Art

Conventionally, a method of textile printing on a fabric using an ink containing a dispersible dye is known. As such methods, known are a method of dyeing by directly applying an ink containing a dispersible dye to a fabric (direct textile printing), and a method of dyeing by applying an ink containing a dispersible dye to a transfer medium, and then transferring the ink from the transfer medium (sublimation transfer). The ink is usually applied by an inkjet method from the viewpoint of short dyeing time and high production efficiency.

A dispersible dye generally exhibits hydrophobicity, thus it is easy to fix the dye on a polyester fiber fabric, which exhibits hydrophobicity, resulting in appropriate textile printing. However, for fabrics made of other materials, for example, fabrics containing hydrophilic fibers such as natural fibers, the polarity difference between the dispersible dye and the fabric is large, thus the permeation and fixation of the dispersible dye is not sufficient, making proper textile printing difficult. For fabrics other than polyester fiber fabrics (particularly fabrics containing hydrophilic fibers such as natural fibers), studies have been made to enhance the fixability of inks containing dispersible dyes.

There are several methods to enhance the fixability of an ink, such as pretreating a fabric, or adding a binder resin to the ink. For example, a pretreatment liquid containing polyester resin particles and a urethane resin emulsion is known as a pretreatment liquid for a blended fabric of polyester fiber and cotton (see, Japanese Patent Application Laid-Open No. 2019-90149). As an ink containing a binder resin, an inkjet ink containing a dispersible dye and polyester resin particles (as a binder) is also known (see, WO2016/027835).

As described above, the pretreatment liquid of Japanese Patent Application Laid-Open No. 2019-90149 and the ink of WO 2016/027835 both contain polyester resin particles. Polyester resin particles have a satisfactory affinity for dispersible dyes, thereby enabling the formation of images with high density. However, polyester resins have a relatively high rigidity, thus image-formed products (product on which an image is formed) obtained by using the pretreatment liquid or the ink containing polyester resin particles are more likely to become hard and the texture of the fabrics is more likely to be impaired.

Polyester resin particles have a high affinity with dispersible dyes, but have a low affinity with fabrics containing a hydrophilic fiber such as a natural fiber. Therefore, the permeability and fixability of the dispersible dye (via the polyester resin particles) to such a fabric are not sufficiently enhanced.

The present invention has been made in the view of the above situations, and an object of the present invention is to provide a pretreatment liquid, a pretreated fabric and a method for producing the pretreated fabric, an ink set, and an image forming method capable of forming an image with high density and satisfactory fixability even on a fabric containing a hydrophilic fiber such as a natural fiber without impairing the texture of the fabric by using a dispersible dye.

## SUMMARY OF THE INVENTION

The present invention relates to a pretreatment liquid, a pretreated fabric and a method for producing the pretreated fabric, an ink set, and an image forming method as follows.

To achieve at least one of the abovementioned objects, according to an aspect of the present invention, a pretreatment liquid reflecting one aspect of the present invention is applicable for a fabric to be dyed with an inkjet ink containing a dispersible dye, and the pretreatment liquid contains a block copolymer including a hydrophobic block derived from a hydrophobic resin having an SP value of less than 11, and a hydrophilic block derived from a hydrophilic resin having an SP value of 11 or more; and water. The difference between the SP values of the hydrophobic resin and the hydrophilic resin is 1.0 or more.

To achieve at least one of the abovementioned objects, according to an aspect of the present invention, a pretreated fabric reflecting one aspect of the present invention is a pretreated fabric to be subjected to an application of an inkjet ink containing a dispersible dye, the pretreated fabric being obtained by pretreating at least a surface of a fabric, and the pretreated fabric contains a block copolymer including a hydrophobic block derived from a hydrophobic resin having an SP value of less than 11 and a hydrophilic block derived from a hydrophilic resin having an SP value of 11 or more. The difference between the SP values of the hydrophobic resin and the hydrophilic resin is 1.0 or more.

To achieve at least one of the abovementioned objects, according to an aspect of the present invention, a

method for producing a pretreated fabric reflecting one aspect of the present invention includes applying the pretreatment liquid of the present invention to at least a surface of a fabric to obtain the pretreated fabric.

To achieve at least one of the abovementioned objects, according to an aspect of the present invention, an ink set reflecting one aspect of the present invention includes a pretreatment liquid and an inkjet ink containing a dispersible dye.

To achieve at least one of the abovementioned objects, according to an aspect of the present invention, an image forming method reflecting one aspect of the present invention includes 1) preparing a pretreated fabric that contains a block copolymer including a hydrophobic block derived from a hydrophobic resin having an SP value of less than 11, and a hydrophilic block derived from a hydrophilic resin having an SP value of 11 or more, at least a surface of the pretreated fabric being pretreated, the difference between the SP values of the hydrophobic resin and the hydrophilic resin being 1.0 or more; and 2) applying an ink layer containing a dispersible dye to a treated surface of the pretreated fabric.

Advantageous Effects of Invention

The present invention provides a pretreatment liquid, a pretreated fabric and a method for producing the pretreated fabric, an ink set, and an image forming method capable of forming an image with high density and satisfactory fixability even on a fabric containing a hydrophilic fiber such as a natural fiber without impairing the texture of the fabric by using a dispersible dye.

## DESCRIPTION OF THE PREFERRED EMBODIMENTS

Hereinafter, one or more embodiments of the present invention will be described in detail. However, the scope of the invention is not limited to the disclosed embodiments.

The present inventors have found that a pretreatment liquid containing a block copolymer including a hydrophobic block derived from a hydrophobic resin, which has a relatively low SP value such as polyester, and a hydrophilic block derived from a hydrophilic resin, which has a relatively high SP value, allows satisfactory permeation and fixing of a dispersible dye in a fabric containing, for example, a natural fiber (hydrophilic fiber) without impairing the texture of the fabric.

The reason for this is not clear, but it is presumed as follows.

The hydrophilic block of the block copolymer has a high affinity with a fabric containing a natural fiber (hydrophilic fiber), thereby enhancing the binding property of the block copolymer to the fabric. The hydrophobic block of the block copolymer has a satisfactory affinity with the disperse dye contained in the ink, thereby enhancing the permeability and fixability of the dispersible dye to the fabric while enabling the formation of an image with high density.

The block copolymer include not only a hydrophobic block having a rigid structure such as polyester, but also a hydrophilic block having a flexible structure such as alkylene oxide. Therefore, the block copolymer may have lower crystallinity than a conventional polyester resin, so that the fabric is less likely to become hard and the texture thereof is less likely to be impaired. The block copolymer is readily softened by heating, thereby promoting the permeation and fixing of the dispersible dye in the fabric by heating in the coloring step. From the foregoing, the block copolymer facilitates the permeation and fixation of a dispersible dye in a fabric without impairing the texture of the fabric.

In particular, the Tg of the block copolymer is preferably moderately low (preferably less than 30°C, more preferably less than 25°C). A fabric containing a low Tg block copolymer has moderate flexibility, thus the texture of the fabric is less likely to be impaired. The block copolymer (in the pretreated fabric) is more likely to soften during heating in the coloring step, the permeability and fixability of the dispersible dye to the fabric are likely to be further enhanced. Hereinafter, the configuration of the present invention will be described.

1. Pretreatment Liquid

A pretreatment liquid of the present invention is applicable for a fabric to be used for textile printing with an inkjet ink (ink) containing a dispersible dye. The pretreatment liquid contains a specific block copolymer and water.

1-1. Specific Block Copolymer

The specific block copolymer includes at least one hydrophobic block derived from a hydrophobic resin having an SP value of less than 11 and at least one hydrophilic block derived from a hydrophilic resin having an SP value of 11 or more. Difference $\Delta SP$ ($SP_B$ — $SP_A$) between the SP value ($SP_B$) of the hydrophilic resin, which constitutes the hydrophilic block, and the SP value ($SP_A$) of the hydrophobic resin, which constitutes the hydrophobic block, is preferably 1.0 or more. In a block copolymer having the $\Delta SP$ of 1.0 or more, the hydrophilic block has a high affinity for a fabric

containing a hydrophilic fiber such as a natural fiber, thus the binding property of the block copolymer to such a fabric is more likely to be enhanced; and a hydrophobic block has an affinity for a dispersible dye which exhibits hydrophobicity, thus the permeation and fixation of the dispersible dye in the fabric is more likely to be facilitated. From the same viewpoint, the ΔSP is more preferably 2.0 or more.

The SP value is referred to as a solubility parameter. The SP value of a resin material in the present invention can be obtained from a molecular attractive force constant, that is, by a method in which the SP value is obtained by the equation SP value = ΣG/V from the molecular attractive force constant (G) of each functional group or atomic group constituting the resin molecule and the molar volume (V) (D. A. Small, J. Appl. Chem., 3,71, (1953), K. L. Hoy, J. Paint Technol., 42, 76 (1970)).

When the hydrophobic resin and/or hydrophilic resin in the block copolymer is more than one type, the ΔSP value is preferably the difference between the SP value of the hydrophobic resin having the largest SP value among the hydrophobic resins having SP values less than 11 and the SP value of the hydrophilic resin having the smallest SP value among the hydrophilic resins having SP values of 11 or more.

Hydrophobic Block

The hydrophobic block is derived from a hydrophobic resin having an SP value of less than 11. The hydrophobic block has an affinity with a dispersible dye thus facilitates the permeation and fixation of the dispersible dye in a fabric (via the block copolymer).

From the viewpoint of further enhancing the affinity with the dispersible dye, the hydrophobic resin having an SP value of less than 11 not only has a ΔSP value in the above range but also preferably has a difference from the SP value of the dispersible dye in the ink at a certain level or less (for example, within ±2). For example, the SP value of the hydrophobic resin constituting the hydrophobic block is preferably 8.7 to 11, more preferably 9.5 to 11, and even more preferably 10.2 to 11.

Further, the hydrophobic resin having an SP value of less than 11 is preferably a resin having higher crystallinity than the hydrophilic resin, and more preferably is a crystalline resin. Crystalline resins usually have a melting point.

Examples of the hydrophobic resin having an SP value of less than 11 include polyester (SP value: 10.7), polytetrafluoroethylene (PTFE) (SP value: 6.2), polyisobutylene (SP value:7.7), polyethylene (SP value: 8.1), polyisoprene (SP value: 8.15), polylauryl methacrylate (SP value: 8.2), polystearyl methacrylate (SP value: 8.2), poly(isovonyl methacrylate) (SP value:8.2), poly(t-butyl methacrylate) (SP value: 8.2), polybutadiene (SP value: 8.4), polystyrene (SP value: 9.1), polyethyl methacrylate (SP value: 9.1), polyethyl acrylate (SP value: 9.2), polymethyl methacrylate (SP value:9.3), polymethyl acrylate (SP value: 9.7), and polyvinyl chloride (SP value: 10.1). In particular, polyester (SP value: about 10.7) is preferred.

Polyester may be any polymer, and is obtained by reacting a dicarboxylic acid with a diol. That is, the polyester contains a component unit derived from a dicarboxylic acid and a component unit derived from a diol

Components Unit Derived from Dicarboxylic Acid

Any component unit derived from a dicarboxylic acid may be used, but from the viewpoint of enhancing the affinity with a fabric containing a polyester fiber, the component units preferably contain a component unit derived from an aromatic dicarboxylic acid.

Examples of the aromatic dicarboxylic acid include terephthalic acid, isophthalic acid, phthalic acid (orthophthalic acid), naphthalene-2,6-dicarboxylic acid, naphthalene-2,7-dicarboxylic acid, and anthracendicarboxylic acid. The aromatic dicarboxylic acid is preferably terephthalic acid.

These aromatic dicarboxylic acids may further have an anionic group (for example, carboxyl group or sulfonyl group). Examples of the aromatic dicarboxylic acid having an anionic group include trimellitic acid, sulfoterephthalic acid, sulfoisophthalic acid, and sulfophthalic acid.

The component units derived from the aromatic dicarboxylic acid may be 5 to 100 mol%, preferably 10 to 100 mol%, based on the total number of moles of the component units derived from the dicarboxylic acid.

The component units derived from the dicarboxylic acid may further contain a component unit derived from any dicarboxylic acid other than the above, if necessary. Examples of the other dicarboxylic acids include alicyclic dicarboxylic acids such as 1,4-cyclohexanedicarboxylic acid and cyclopentanedicarboxylic acid, and aliphatic dicarboxylic acids such as adipic acid, succinic acid, oxalic acid, and sebacic acid.

Components Unit Derived from Diol

Any component unit derived from a diol may be used, but from the viewpoint of enhancing the affinity with a fabric containing a polyester fiber, the component units preferably contain a component unit derived from an aliphatic diol.

The aliphatic diol preferably has 1 to 10 carbon atoms, more preferably 1 to 4 carbon atoms. Examples of such a aliphatic diol include alkylene diols such as ethylene glycol, trimethylene glycol, 1,4-butanediol, pentamethylene glycol, hexamethylene glycol, neopentyl glycol, and decamethylene glycol. The aliphatic diol is preferably ethylene glycol.
The aliphatic diol may further have an anionic group as described above. Examples of the aliphatic diol having an anionic group include N,N-bis(2-hydroxyethyl)-2-aminoethanesulfonic acid (CAS number: 10191-18-1), dimethylolpropionic acid, and dimethylol.
The component units derived from the aliphatic diol may be 5 to 100 mol%, preferably 10 to 100 mol%, based on the total number of moles of the component units derived from the diol.
The component units derived from the diol may further contain a component unit derived from any diol other than the above, if necessary. Examples of the other diols include aromatic diols such as xylylene glycol and alicyclic diols such as cyclohexanedimethanol.

Physical Properties

The weight average molecular weight of the hydrophobic block (hydrophobic resin) (weight average molecular weight per hydrophobic block) may be any value, but is preferably 500 to 10,000. A hydrophobic block having a weight average molecular weight of 500 or more is more likely to exhibits the characteristics of the hydrophobic block, thereby enhancing the affinity with the dispersible dye. A hydrophobic block having a weight average molecular weight of 10,000 or less is less likely to impair the texture of a fabric. In addition, the crystallinity of the block copolymer does not become too high with the weight average molecular weight in the above range, thus the permeability and dyeing ability of the dispersible dye during heating in the coloring step are less likely to be impaired. From the same viewpoint, the weight average molecular weight of the hydrophobic block is more preferably 500 to 5,000.
The weight average molecular weight of hydrophobic blocks can be measured in terms of polystyrene by gel permeation chromatography.
Specifically, a weight average molecular weight can be measured by arranging three columns (Shodex™ GPC KF-806L (exclusion limit molecular weight: $2 \times 10^7$, separation range: 100 to $2 \times 10^7$, theoretical stage number: 10000 stages/piece, filler material: styrene-divinylbenzene copolymer, filler particle size: 10 $\mu$m)) in series in high performance liquid chromatography ("Waters 2695 (main body)" and "Waters 2414 (detector)" from Nihon Waters K.K.).
As described above, the hydrophobic block (hydrophobic resin) preferably has higher crystallinity than the hydrophilic resin, and may have a glass transition temperature Tg higher than that of the hydrophilic resin. For example, the Tg of the hydrophobic resin may be 50 to 110°C. The Tg of the hydrophobic resin and the hydrophilic resin may be measured in the same manner as the Tg of a block copolymer described below.
The content of the hydrophobic block in the block copolymer on a mass basis is preferably less than the content of the hydrophilic block on a mass basis. Specifically, the content of the hydrophobic block is preferably 5 to 40 mass% based on the total content of the hydrophobic block and the hydrophilic block. When the content of the hydrophobic block is 5 mass% or more, the block copolymer may have an increased affinity with the dispersible dye (via the hydrophobic block) in the ink, and the permeability and fixability of the dispersible dye in the fabric is more likely to be enhanced. When the content of the hydrophobic block is 40 mass% or less, the content of the hydrophilic block does not become too small, so that the binding property of the block copolymer to the fabric is less likely to be impaired. From the same viewpoint, the content of the hydrophobic block is more preferably 10 to 30 mass% based on the total content of the hydrophobic block and the hydrophilic block.

Hydrophilic Block

The hydrophilic block is derived from a hydrophilic resin having an SP value of 11 or more. The hydrophilic block has a high affinity for a fabric containing a hydrophilic fiber such as a natural fiber, thus can enhance the binding property of the block copolymer to the fabric.
The hydrophilic resin has an SP value of 11 or more, and preferably has an SP value that is within ± 2.0, more preferably within ± 1.0, and even more preferably within ± 0.5 relative to the SP value of the hydrophilic fiber constituting a fabric to be used. When the hydrophilic fiber constituting the fabric is a cellulose fiber having an SP value of 15.7, the SP value of the hydrophilic resin constituting the hydrophilic blocks is preferably 13.7 to 17.7, more preferably 14.7 to 16.7, and even more preferably 15.2 to 16.2.
The hydrophilic resin having an SP value of 11 or more is preferably a resin having a lower crystallinity than the hydrophobic resin, and more preferably is an amorphous resin. When the hydrophilic block is an amorphous resin, the obtained image-formed product is less likely to become hard and the texture thereof is less likely to be impaired. Further, as such a hydrophilic block is more likely to be softened by heating and to increase the free volume, the dispersible dye is more likely to permeate a fabric due to the heating in the coloring step. Amorphous resins have substantially no melting point.

Examples of the hydrophilic resin having an SP value of 11 or more include polyalkylene oxide (SP value: 11.0 to 14.6), polyvinyl alcohol (SP value: 12.6), polyamide (SP value: 13.6), polyacrylonitrile (SP value: 14.8), and polyvinylpyrrolidone. The hydrophilic resin is preferably polyalkylene oxide.

Any polyalkylene oxide may be used, but poly(C2-6 alkylene oxide) is preferred. Examples of the polyalkylene oxide include poly(ethylene oxide), poly(propylene oxide), poly(trimethylene oxide), poly(tetramethylene oxide), poly(hexamethylene oxide), copolymers of ethylene oxide and propylene oxide, ethylene oxide adducts of poly(propylene oxide), and copolymers of ethylene oxide and tetrahydrofuran. In particular, polyethylene oxide is preferred from the viewpoint of having a high affinity with a fabric containing a hydrophilic fiber such as cotton for facilitating satisfactory binding.

The weight average molecular weight of the hydrophilic block (hydrophilic resin) (weight average molecular weight per hydrophilic block) may be any value, but is preferably 500 to 6,000. A hydrophilic blocks having a weight average molecular weight of 500 or more is more likely to exhibits the characteristics of the hydrophilic block, thereby facilitating satisfactory binding of the block copolymer to a fabric containing a hydrophilic fiber such as cotton. A hydrophilic block having a weight average molecular weight of 6,000 or less is less likely to impair the texture of the image-formed product. From the same viewpoint, the weight average molecular weight of the hydrophilic block is more preferably 500 to 5,000. The weight average molecular weight of the hydrophilic block can be measured by the same method as described above.

As described above, the hydrophilic block (hydrophilic resin) preferably has lower crystallinity than that of the hydrophobic resin, and may have a glass transition temperature Tg or a melting point Tm lower than that of the hydrophobic resin. For example, the Tg or Tm of the hydrophilic resin may be -110 to 60°C.

The content of the hydrophilic block on a mass basis is preferably higher than the content of the hydrophobic block on a mass basis in the block copolymer. Specifically, the content of the hydrophilic block is preferably 60 to 95 mass% based on the total content of the hydrophobic block and the hydrophilic block. When the content of the hydrophilic block is 60 mass% or more, the binding property of the block copolymer to a fabric containing a hydrophilic fiber such as a natural fiber is more likely to be enhanced. When the content of the hydrophilic block is 95 mass% or less, the content of the hydrophobic block does not become too small, so that the affinity with a dispersible dye in an ink is less likely to be impaired, and the permeability and fixability of the dispersible dye in the fabric are less likely to be impaired. From the same viewpoint, the content of the hydrophilic block is more preferably 70 to 90 mass% based on the total content of the hydrophobic block and the hydrophilic block.

[Block Copolymer]

The specific block copolymer includes the above described hydrophobic and hydrophilic blocks, but preferably does not include a urethane bond. Resins with urethane bonds tend to lose their fixability to fabrics from light degradation.

The weight average molecular weight of the specific block copolymer may be any value, but is preferably 1,000 to 30,000. A block copolymer having a weight average molecular weight of 1,000 or more is more likely to enhance the binding property thereof to a fabric, and a block copolymer having a weight average molecular weight of 30,000 or less allows a fabric to be less likely to become hard and the texture thereof is less likely to be impaired. From the same viewpoint, the weight average molecular weight of the specific block copolymer is more preferably 2,000 to 25,000.

The glass transition temperature Tg or melting point Tm of the specific block copolymer may be any value, but is preferably less than 30°C. The block copolymer having Tg or Tm of less than 30°C has moderate flexibility, so that the block copolymer is less likely to prevent a dispersible dye from permeating a pretreated fabric when an ink containing a dispersible dye is applied to the pretreated fabric to fix the ink. For example, in transfer textile printing, an ink on a transfer medium is placed on the surface of a fabric and transferred by heating and pressing. As the heat during the heating and pressing may soften the block copolymer, prevention of the dispersible dye from permeating the fabric is less likely occur. As a result, the dyeing ability of the dispersible dye increases, further enhancing the fixability. From the same viewpoint, the Tg or Tm of the specific block copolymer is more preferably -20°C or higher and lower than 25°C, and further preferably 0 to 20°C.

The glass transition temperature Tg or melting point Tm of a block copolymer can be identified by reading the Tg or Tm from the endothermic peak obtained by raising the temperature in the temperature range of -30 to 100°C at a temperature-raising rate of 10°C/min with the use of a differential scanning calorimetry device (DSC).

The Tg or Tm of the block copolymer can be adjusted by, for example, the content ratios of the hydrophilic block and the hydrophobic block. The Tg or Tm depends on the type of resin constituting the hydrophilic block or the hydrophobic block, but it is preferable to increase, for example, the content ratio of the hydrophilic block for lowering the Tg or Tm of the block copolymer.

The content of the specific block copolymer may be any value, but is preferably 2 to 60 mass% with respect to the pretreatment liquid. A block copolymer whose content is 2 mass% or more allow for a sufficient applied amount of (amount of adhesion) the block copolymer, and thus is more likely to increase the image density. A block copolymer whose content is 60 mass% or less is less likely to increase the applied amount of the block copolymer to the fabric,

and thus is less likely to impair the texture of the fabric. From the same viewpoint, the content of the specific block copolymer is more preferably 5 to 20 mass% with respect to the pretreatment liquid.

1-2. Additional Components

The pretreatment liquid may additionally contain components other than the above described components, if necessary. Examples of the additional components include solvents, preservatives, and pH adjusters.

Solvent

Any solvent may be used, but the solvent preferably contains a water-soluble organic solvent from the viewpoint of, for example, moisturizing property and viscosity adjustment. In particular, for applying the pretreatment liquid to a fabric by an inkjet method, the pretreatment liquid preferably further contains a water-soluble organic solvent.

Examples of the water-soluble organic solvent include alcohols, such as methanol, ethanol, propanol, pentanol, hexanol, cyclohexanol, and benzyl alcohol; polyhydric alcohols, such as ethylene glycol, diethylene glycol, triethylene glycol, polyethylene glycol, propylene glycol, dipropylene glycol, tripropylene glycol, polypropylene glycol, glycerin, and compounds represented by the formula (1) below; polyhydric alcohol ethers, such as ethylene glycol monomethyl ether, ethylene glycol monoethyl ether, ethylene glycol monobutyl ether, ethylene glycol monophenyl ether, diethylene glycol monomethyl ether, diethylene glycol monoethyl ether, diethylene glycol monobutyl ether, diethylene glycol dimethyl ether, propylene glycol monomethyl ether, and propylene glycol monoethyl ether; amines, such as ethanolamine, N-ethyldiethanolamine, morpholine, N-ethylmorpholine, ethylenediamine, diethylenediamine, and triethylenetetramine; amides, such as formamide, N,N-dimethylformamide, and N,N-dimethylacetamide; heterocycles, such as 2-pyrrolidone, N-methyl-2-pyrrolidone, N-cyclohexyl-2-pyrrolidone, 2-oxazoridone, and 1,3-dimethyl-2-imidazolidine; sulfoxides, such as dimethyl sulfoxide; and sulfones, such as sulfolane.

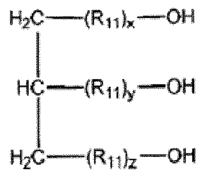

Formula (1)

In the formula (1), $R_{11}$ individually represents an ethylene glycol group or a propylene glycol group, and x, y and z are individually positive integers, and x + y + z = 3 to 30.

In particular, from the viewpoint of promoting the permeation of a dispersible dye into the fiber of a fabric during heating in the coloring step (particularly in the case of transfer textile printing), the pretreatment liquid preferably contains a water-soluble organic solvent that has a high affinity with the hydrophilic fiber contained in the fabric. Such a water-soluble organic solvent is preferably a polyhydric alcohol having a molecular weight of 400 or more and 1,000 or less, such as polyethylene glycol having a molecular weight of 400 or more and 1,000 or less, a polypropylene glycol having a molecular weight of 400 or more and 1,000 or less, glycerin, or a compound represented by the formula (1). In particular, glycerin is more preferred.

The content of the polyhydric alcohol may be 25 to 100 mass%, preferably 50 to 100 mass%, with respect to the water-soluble organic solvent.

The content of the water-soluble organic solvent may be 10 to 50 mass%, preferably 20 to 40 mass%, with respect to the pretreatment liquid.

Preservative

Examples of the preservative include aromatic halogen compounds (such as Preventol CMK), methylene diisocyanate, halogen-containing nitrogen-sulfur compounds, and 1,2-benzisothiazolin-3-one (such as PROXEL GXL).

pH Adjuster

Examples of the pH adjuster include citric acid, sodium citrate, hydrochloric acid, and sodium hydroxide.

From the viewpoint of not impairing the texture of a fabric material, it is preferable that the pretreatment liquid is substantially free of a binder resin, such as a water-soluble resin or a water-dispersible resin (resin particles). The term "substantially free" means the content is, for example, less than 5 mass%, preferably 0 mass% with respect to the pretreatment liquid.

1-3. Physical Properties

The viscosity of the pretreatment liquid at 25°C may also be appropriately adjusted according to the method of applying the pretreatment liquid to a fabric. For example, when the pretreatment liquid is applied by an inkjet method, the viscosity of the pretreatment liquid is preferably 4 to 20 mPa·s. The viscosity of the pretreatment liquid can be measured by an E-type viscometer at 25°C.

2. Method for Producing Pretreated Fabric, and Pretreated Fabric

The pretreated fabric of the present invention can be produced through a step of applying the pretreatment liquid of the present invention to at least a part of the surface of a fabric.

Fabric

The fiber material constituting the fabric may be any fiber, and preferably contains a natural fiber (hydrophilic fiber) such as cotton (cellulose fiber), linen, wool, or silk. The fiber material may also contain an additional fiber. Examples of the additional fiber include chemical fibers such as rayon, vinylon, nylon, acryl, polyurethane, polyester, and acetate. The fabric may be in any form of these fibers, such as a woven fabric, a non-woven fabric, or a knitted fabric. The fabric may be a blended woven fabric or blended non-woven fabric of two or more types of fibers. In particular, the fabric preferably contains at least one of cotton and a polyester fiber.

Application of Pretreatment Liquid

The pretreatment liquid may be applied to the entire surface of a fabric, or may be selectively applied only to the area to be subjected to the application of the ink. The pretreatment liquid may be applied at any amount which can be adjusted according to the content of the block copolymer in the pretreatment liquid, the amount of an ink to be applied, and the like. For example, the applied amount of the pretreatment liquid is set in such a way that the applied amount (amount of adhesion) of the block copolymer to the fabric becomes preferably 5 to 70 $g/m^2$, more preferably 20 to 60 $g/m^2$ per untreated fabric.

The method of applying the pretreatment liquid may be any method, and may be any of a spray method, a mangle method (padding), a coating method, and an inkjet method. For example, the inkjet method is preferred from the viewpoint of continuously performing with an ink application step in the image forming method described below, and the mangle or coater method is preferred from the viewpoint of applying a predetermined amount of the pretreatment liquid in a short time.

In the mangle method, a fabric is immersed in the pretreatment solution stored in a bath, and then squeezed to adjust the applied amount of pretreatment solution. The temperature of the pretreatment liquid is not limited, but may be 15 to 30°C.

Drying of Pretreatment Liquid

The pretreatment liquid applied to the fabric is then dried.

The drying method may be any method, such as heating by hot air, a hot plate, or a heat roller. Drying by heat is preferred from the viewpoint of sufficiently removing the solvent component in a short time. The drying temperature may be 100 to 130°C.

Pretreated Fabric

The obtained pretreated fabric contains, at least on the surface thereof, the above described block copolymer.

The block copolymer thus can bind to a fabric containing a hydrophilic fiber via the hydrophilic block, while binding to the dispersible dye in the ink via the hydrophobic block. Thereby, the dispersible dye can satisfactorily permeate and be fixed to a fabric containing a hydrophilic fiber.

3. Ink Set

The ink set of the present invention contains the pretreatment liquid of the present invention and an ink.

The ink contains a dispersible dye and water.

3-1. Dispersible Dye

Dispersible dyes are insoluble or poorly soluble in water, and examples thereof include not only disperse dyes but also sublimation dyes (also referred to as sublimation disperse dyes). The type of dispersible dye is not particularly limited, and examples thereof include azo-based dyes and anthraquinone-based dyes.

Specifically, examples of the dispersible dyes include the following:

C.I. Disperse Yellow 3, 4, 5, 7, 9, 13, 24, 30, 33, 34, 42, 44, 49, 50, 51, 54, 56, 58, 60, 63, 64, 66, 68, 71, 74, 76, 79, 82, 83, 85, 86, 88, 90, 91, 93, 98, 99, 100, 104, 114, 116, 118, 119, 122, 124, 126, 135, 140, 141, 149, 160, 162, 163, 164, 165, 179, 180, 182, 183, 186, 192, 198, 199, 202, 204, 210, 211, 215, 216, 218, and 224;
C.I. Disperse Orange 1, 3, 5, 7, 11, 13, 17, 20, 21, 25, 29, 30, 31, 32, 33, 37, 38, 42, 43, 44, 45, 47, 48, 49, 50, 53, 54, 55, 56, 57, 58, 59, 61, 66, 71, 73, 76, 78, 80, 89, 90, 91, 93, 96, 97, 119, 127, 130, 139, and 142;
C. I. Disperse Red 1, 4, 5, 7, 11, 12, 13, 15, 17, 27, 43, 44, 50, 52, 53, 54, 55, 56, 58, 59, 60, 65, 72, 73, 74, 75, 76, 78, 81, 82, 86, 88, 90, 91, 92, 93, 96, 103, 105, 106, 107, 108, 110, 111, 113, 117, 118, 121, 122, 126, 127, 128, 131, 132, 134, 135, 137, 143, 145, 146, 151, 152, 153, 154, 157, 159, 164, 167, 169, 177, 179, 181, 183, 184, 185, 188, 189, 190, 191, 192, 200, 201, 202, 203, 205, 206, 207, 210, 221, 224, 225, 227, 229, 239, 240, 257, 258, 277, 278, 279, 281, 288, 289, 298, 302, 303, 310, 311, 312, 320, 324, and 328;
C.I. Disperse Violet 1, 4, 8, 23, 26, 27, 28, 31, 33, 35, 36, 38, 40, 43, 46, 48, 50, 51, 52, 56, 57, 59, 61, 63, 69, and 77;
C.I. Disperse Green 9;
C.I. Disperse Brown 1, 2, 4, 9, 13, and 19;
C.I. Disperse Blue 3, 7, 9, 14, 16, 19, 20, 26, 27, 35, 43, 44, 54, 55, 56, 58, 60, 62, 64, 71, 72, 73, 75, 79, 81, 82, 83, 87, 91, 93, 94, 95, 96, 102, 106, 108, 112, 113, 115, 118, 120, 122, 125, 128, 130, 139, 141, 142, 143, 146, 148, 149, 153, 154, 158, 165, 167, 171, 173, 174, 176, 181, 183, 185, 186, 187, 189, 197, 198, 200, 201, 205, 207, 211, 214, 224, 225, 257, 259, 267, 268, 270, 284, 285, 287, 288, 291, 293, 295, 297, 301, 315, 330, and 333; and
C.I. Disperse Black 1, 3, 10, and 24.

The molecular weight of the dispersible dye may be any value, but when image formation is performed by, for example, transferring an ink applied on a transfer medium to a fabric (sublimation textile printing), the molecular weight is preferably small (for example, 200 to 350) from the viewpoint of facilitating sublimation of the dispersible dye. On the other hand, from the viewpoint of making it difficult for the dispersible dye that has permeated the fabric to come off, the molecular weight is preferably moderately large (for example, 350 to 500).

The average particle diameter of the dispersible dye is not particularly limited, but may be, for example, 300 nm or less from the viewpoint of ejection stability by the inkjet method. The average particle diameter can be determined by a commercially available particle size analyzer using light scattering method, electrophoresis method, laser Doppler method, or the like, and specific examples of the particle size analyzer include Zetasizer 1000, from Malvern Instruments Ltd.

The content of the dispersible dye is not particularly limited, but is preferably 2 to 10 mass% with respect to the ink. A dispersible dye whose content is 2 mass% or more is more likely to form an image with high density, and a dispersible dye whose content is 10 mass% or less allows the viscosity of the ink not to become too high, and thus is less likely to impair the ejection stability. From the same viewpoint, the content of the dispersible dye is more preferably 5 to 10 mass% with respect to the ink.

3-2. Additional Components

The ink may additionally contain other components, if necessary. Examples of the additional components include solvents, pigment dispersants, preservatives, and pH adjusters.

Solvent

Any solvent may be used, but the solvent is preferably a water-soluble organic solvent. As the water-soluble organic solvent, any water-soluble organic solvent the same as that used for the pretreatment liquid can be used. In particular, from the viewpoint of facilitating the permeation of the ink in the pretreated fabric and the viewpoint of allowing the ejection stability to be less likely to be impaired in an inkjet method, it is preferable that the ink does not thicken due to drying. The ink thus preferably contains a high boiling point solvent having a boiling point of 200°C or higher.

The high boiling point solvent having a boiling point of 200°C or higher may be any water-soluble organic solvent having a boiling point of 200°C or higher, and is preferably a polyol or a polyalkylene oxide. Examples of the polyols having a boiling point of 200°C or higher include dihydric alcohols such as 1,3-butanediol (boiling point 208°C), 1,6-hexanediol (boiling point 223°C), and polypropylene glycol; and trihydric or higher alcohols such as glycerin (boiling

point 290°C) and trimethylolpropane (boiling point 295°C). Examples of the polyalkylene oxides having a boiling point of 200°C or higher include diethylene glycol monoethyl ether (boiling point 202°C), triethylene glycol monomethyl ether (boiling point 245°C), tetraethylene glycol monomethyl ether (boiling point 305°C), tripropylene glycol monoethyl ether (boiling point 256°C); and ethers of divalent alcohols such as polypropylene glycol and ethers of trihydric or higher alcohols such as glycerin (boiling point 290°C) and hexanetriol.

The content of the water-soluble organic solvent is not particularly limited, but may be 20 to 70 mass% with respect to the ink. A water-soluble organic solvent whose content with respect to the ink is 20 mass% or more is more likely to enhance the dispersibility and ejection property of the dispersible dye, and a water-soluble organic solvent whose content is 70 mass% or less is less likely to impair the drying property of the ink.

Dispersant

The dispersant may be selected according to the type of dispersible dye. Examples of the dispersant include formalin condensates of creosote oil sodium sulfonate, formalin condensates of sodium cresolsulfonate and sodium 2-naphthol-6-sulfonate, formalin condensates of sodium cresolsulfonate, formalin condensates of sodium phenolsulfonate, formalin condensates of sodium β-naphtholsulfonate, formalin condensates containing sodium β-naphthalenesulfonate and sodium β-naphtholsulfonate, alkylene oxides including ethylene oxide and propylene oxide, compounds that can be alkylated, such as fatty alcohols, fatty amines, fatty acids, phenols, alkylphenols and amine carboxylates, ligninsulphonates, sodium paraffinsulfonates, copolymers of α-olefin and maleic anhydride, and known comb-shaped block polymers.

Examples of the comb-shaped polymer include DISPERBYK-190, DISPERBYK-194N, DISPERBYK-2010, DISPERBYK-2015 and BYK-154 (BYK, Inc., "DISPERBYK" and "BYK" are registered trademarks of the company).

The content of the dispersant is not particularly limited, but may be 20 to 200 parts by mass based on 100 parts by mass of the dispersible dye. A dispersant whose content is 20 parts by mass or more is more likely to enhance the dispersibility of the dispersible dye, and a dispersant whose content is 200 parts by mass or less is more likely to prevent the reduction of the ejection property caused by the dispersant.

Preservative and pH Adjuster

As the preservative and pH adjuster, the same preservative and pH adjuster that may be used in the pretreatment liquid can be used.

3-3. Physical Properties

The viscosity of the ink at 25°C may be any value such that the ejection property by the inkjet method becomes satisfactory, but is preferably 3 to 20 mPa·s, and more preferably 4 to 12 mPa·s. The viscosity of the pretreatment liquid can be measured by an E-type viscometer at 25°C.

4. Image Forming Method and Image-formed Product

Image Forming Method

The image forming method of the present invention includes steps of 1) preparing a pretreated fabric of the present invention, and 2) applying an ink layer containing a dispersible dye to the surface of the pretreated fabric, and preferably further includes a step of 3) heating the ink layer to fix and develop the dispersible dye. For image formation, for example, the ink set of the present invention may be used.

Step 1

A pretreated fabric is prepared. The pretreated fabric may be obtained by applying a pretreatment liquid to a fabric by the above described producing method, or may be a pretreated fabric prepared in another line (separate step) in advance for use.

Steps 2 and 3

The application or the like of an ink layer to a fabric may be performed as follows: an ink containing the dispersible dye is directly applied to the fabric (direct textile printing), or the ink layer is formed on a transfer medium and then transferred to the fabric (transfer textile printing).

Direct Textile Printing

In the direct textile printing, the ink is directly applied to the treated surface of the pretreated fabric by an inkjet method (Step 2 described above). Specifically, ink droplets are ejected from the inkjet recording head toward the fabric.
The surface temperature of the fabric when the ink droplets land is not particularly limited, but may be heated in the range of 35 to 70°C from the viewpoint of preventing bleeding of the image before color development.
The ink layer applied to the fabric is then heated to fix the dispersible dye in the fabric to develop color (Step 3 described above).
The heating method may be a conventionally known method, and is appropriately selected depending on the ink and the fabric. Examples of the heating method include steaming with steam, baking with dry heat, thermosol, using HT steamer with superheated steam; and heat press. In particular, the processes such as steaming, baking, and heat press are preferred.
The heating temperature depends on the heating method, but from the viewpoint of strengthening the fixing of the dispersible dye to the fabric, the heating temperature is preferably 95°C or higher and lower than 220°C, more preferably 95°C to 190°C, and even more preferably 100°C to 180°C.
In direct textile printing, other steps may additionally be performed, if necessary. For example, the following steps may further be performed: a pre-drying step of 4) drying the ink applied to the fabric between the steps 2) and 3); or steps of 4) removing the dye and pretreatment liquid that could not have been fixed to the fabric (washing step), and 5) drying the washed fabric (drying step) after the step 3).

Transfer Textile Printing

In the transfer textile printing, an ink is applied onto a transfer medium by an inkjet method and then dried to form an ink layer.
The type of transfer medium may be any medium that can form an ink layer thereon and can transfer the layer therefrom to a fabric (and which does not interfere with dye sublimation during transfer). Examples of the transfer medium include paper with an ink-receiving layer formed on the surface thereof with inorganic particles such as silica (preferred example), dedicated paper for inkjet and transfer paper.
The surface of the ink layer on the transfer medium is then brought into contact with the treated surface of the pretreated fabric and heated (heat pressed) (steps 2 and 3 described above). As a result, the dispersible dye in the ink layer adhering to the transfer medium is sublimated and transferred to the fibers for dyeing.
The transfer temperature (heat press temperature) depends on the sublimation temperature of the dispersible dye, and may be, for example, about 190 to 210°C. The pressing pressure may be 200 to 500 g/cm$^2$ for flat type, and 2 to 6 kg/cm$^2$ for continuous type.

Image-Formed Product

An image-formed product obtained by the image forming method of the present invention includes a pretreated fabric and an image layer.
The image layer is disposed on the pretreated fabric via a specific block copolymer, and is satisfactorily bound to the pretreated fabric. The composition of the image layer is the same as the composition of the solid content of the ink described below.

Examples

Hereinafter, the present invention will be specifically described with reference to Examples, but the present invention is not limited thereto.

1. Preparation of Pretreatment Liquid

Preparation of Material

Resin

Preparation of Block Copolymer 1

Added were 97 g of dimethyl terephthalate, 20 g of ethylene glycol, 0.2 g of anhydrous sodium acetate, and 0.1 g of titanium catalyst (SPC-124, Sakai Chemical Industry Co., LTD.), and after purging with an inert gas, transesterification was performed at a temperature of 165 to 220°C while methanol was distilled off at normal pressure.

Next, added were 36 g of methyl polyethylene glycol 750, 46 g of methyl polyethylene glycol 1820, and 193 g of polyethylene glycol 1500, and after purging with an inert gas, a condensation reaction was performed at a temperature of 160 to 240°C and excess glycol components were distilled off. Then, the resultant was cooled to obtain a solution containing a polyethylene terephthalate (PET with Tg of 75°C) / polyethylene oxide (PEO with Tg of -60°C) block copolymer (block copolymer 1). The physical properties of the obtained block copolymer were as follows.

Tg (or Tm): 25°C
Mw: 6,200
Hydrophobic block (PET), SP value: 10.7 and Mw: 1,100
Hydrophilic block (PEO), SP value: 15.0 and Mw: 1,500
Hydrophilic block content: 70 mass%

Preparation of Block Copolymer 2

A polyethylene terephthalate (PET) / polyethylene oxide (PEO) block copolymer (block copolymer 2) was obtained in the same manner as block copolymer 1 except that the amount of the titanium catalyst (SPC-124, Sakai Chemical Industry Co., LTD.) was 0.02 g. The physical properties of the obtained block copolymer were as follows.

Tg (or Tm): 5°C
Mw: 2,500
Hydrophobic block (PET), SP value: 10.7 and Mw: 700
Hydrophilic block (PEO), SP value: 15.0 and Mw: 1,500
Hydrophilic block content: 70 mass%

Preparation of Block Copolymer 3

Added were 145 g of dimethyl terephthalate, 40 g of dimethyl sodium 5-sulfoisophthalate, 40 g of ethylene glycol, 0.2 g of anhydrous sodium acetate, and 0.01 g of titanium catalyst (SPC-124, Sakai Chemical Industry Co., LTD.), and after purging with an inert gas, transesterification was performed at a temperature of 165 to 220°C while methanol was distilled off at normal pressure.

Next, added were 21 g of methyl polyethylene glycol 750, 26 g of methyl polyethylene glycol 1820, and 110 g of polyethylene glycol 1500, and after purging with an inert gas, a condensation reaction was performed at a temperature of 160 to 240°C and excess glycol components were distilled off. Then, the resultant was cooled to obtain a polyethylene terephthalate (PET) / polyethylene oxide (PEO) block copolymer (block copolymer 3) as a solid content. The physical properties of the obtained block copolymer were as follows.

Tg (or Tm): 35°C
Mw: 9,500
Hydrophobic block (PET), SP value: 10.7 and Mw: 1,500
Hydrophilic block (PEO), SP value: 15.0 and Mw: 1,500
Hydrophilic block content: 40 mass%
Anionic group: Yes

Preparation of Block Copolymer 4

A polyethylene terephthalate (PET) / polyethylene oxide (PEO) block copolymer (block copolymer 4) was obtained in the same manner as block copolymer 3 except that the amount of the titanium catalyst (SPC-124, Sakai Chemical Industry Co., LTD.) was 0.1 g. The physical properties of the obtained block copolymer were as follows.

Tg (or Tm): 40°C
Mw: 20,000
Hydrophobic block (PET), SP value: 10.7 and Mw: 2,300
Hydrophilic block (PEO), SP value: 15.0 and Mw: 1,500
Hydrophilic block content: 40 mass%
Anionic group: No

Preparation of Block Copolymer 5

A polyethylene terephthalate (PET) / polyethylene oxide (PEO) block copolymer (block copolymer 5) was obtained in the same manner as block copolymer 1 except that the charging ratio of the hydrophobic block (PET) and the hydrophilic block (PEO) was changed so that the content of the hydrophilic block (PEO) becomes 40 mass%. The physical properties of the obtained block copolymer were as follows.

Tg (or Tm): 32°C
Mw: 6,200
Hydrophobic block (PET), SP value: 10.7 and Mw: 1,100
Hydrophilic block (PEO), SP value: 15.0 and Mw: 1,500
Hydrophilic block content: 40 mass%

Preparation of Block Copolymer 6

A polyethylene terephthalate (PET) / polyethylene oxide (PEO) block copolymer (block copolymer 6) was obtained in the same manner as in block copolymer 3 except that dimethyl sodium 5-sulfoisophthalate was not used. The physical properties of the obtained block copolymer were as follows.

Tg (or Tm): 35°C
Mw: 9,500
Hydrophobic block (PET), SP value: 10.7 and Mw: 1,500
Hydrophilic block (PEO), SP value: 15.0 and Mw: 1,500
Hydrophilic block content: 40 mass%

Preparation of Block Copolymer 7

A polyethylene terephthalate (PET) / polypropylene oxide (PPO with Tg of -105°C) block copolymer (block copolymer 7) was obtained in the same manner as block copolymer 1 except that PPG1000 (FUJIFILM Wako Pure Chemical Corporation) was used in place of PEG. The physical properties of the obtained block copolymer were as follows.

Tg (or Tm): 27°C
Mw: 6,500
Hydrophobic block (PET), SP value: 10.7 and Mw: 1,100
Hydrophilic block (PPO), SP value: 15.0 and Mw: 1,000
Hydrophilic block content: 70 mass%

Preparation of Block Copolymer 8

A polyethylene terephthalate (PET) / polyethylene oxide (PEO) block copolymer (block copolymer 8) was obtained in the same manner as block copolymer 1 except that the charging ratio of the hydrophobic block (PET) and the hydrophilic block (PEO) was changed so that the content of the hydrophilic block (PEO) becomes 60 mass%. The physical properties of the obtained block copolymer were as follows.

Tg (or Tm): 30°C
Mw: 7,000
Hydrophobic block (PET), SP value: 10.7 and Mw: 1,100
Hydrophilic block (PPO), SP value: 15.0 and Mw: 1,000
Hydrophilic block content: 60 mass%

Vylonal MD2000 (from TOYOBO CO., LTD.): Polyester resin emulsion (Tg: 67°C, number average molecular weight: $18 \times 10^3$, resin concentration 40 mass%)

Superflex 300 (from DKS Co. Ltd.): Polyurethane resin emulsion (Tg: -42°C, resin concentration: 30 mass%)
PEG2000 (from Kanto Chemical Co., Inc.): Polyethylene glycol

The Tg (or Tm) and weight average molecular weight of resins, and the SP value and the weight average molecular weight of blocks were measured by the following methods.

Tg or Tm

The glass transition temperature Tg or melting point Tm of a resin separated from the obtained resin dispersion liquid was read by using a DSC (from METTLER TOLEDO) from the endothermic peak obtained by raising the temperature in the temperature range of -30 to 100°C at a temperature-raising rate of 10°C/min.

Weight Average Molecular Weight

The weight average molecular weight of a resin was measured by arranging three columns (Shodex™ GPC KF-806L (exclusion limit molecular weight: $2 \times 10^7$, separation range: 100 to $2 \times 10^7$, theoretical stage number: 10000 stages/piece, filler material: styrene-divinylbenzene copolymer, filler particle size: 10 μm)) in series in high performance liquid chromatography ("Waters 2695 (main body)" and "Waters 2414 (detector)" from Nihon Waters K.K.).

SP Value

The SP value of blocks was obtained by the above method using the molecular attractive force constant.

Solvent

Ethylene glycol (boiling point 197.6°C)
Glycerin (boiling point 290°C)

Additional Components (Addition)

Preservative: Proxel GXL (1,2-benzisothiazolin-3-one)
pH adjuster: Sodium citrate hydrate

Preparation of Pretreatment Liquids A to O and R

The resins, solvents and additional components were mixed so as to have the compositions shown in Tables 1 and 2 to obtain respective pretreatment liquids A to O and R.

Preparation of Pretreatment Liquids P and Q

Pretreatment liquids P and Q were obtained in the same manner as in pretreatment liquid A except that MD2000 as polyester and PEG200 (from Kanto Chemical Co., Inc.) as polyoxyethylene were mixed at a mass ratio of 6 : 4 for use in place of the block copolymer.

Table 1 shows the compositions of obtained pretreatment liquids A to I, and Table 2 shows the compositions of obtained pretreatment liquids J to R.

Table 1

| | | | | | | | Unit | Pretreatment liquid | | | | | | | | |
|---|---|---|---|---|---|---|---|---|---|---|---|---|---|---|---|---|
| | | | | | | | | A | B | C | D | E | F | G | H | I |
| Composition | Resin (Polymer) | Type | Mw | Tg (°C) | Hydrophobic/ Hydrophilic (mass ratio) | Resin conc. (mass%) | - | | | | | | | | | |
| | | Block copolymer 1 | 6,200 | 25 | 30/70 | 60 | parts by mass | 1.7 | 33.3 | | | | | | | |
| | | Block copolymer 2 | 2,500 | 5 | 30/70 | 70 | | | | 2.9 | 28.6 | 57.1 | 85.7 | 57.1 | | |
| | | Block copolymer 3 | 9,500 | 35 | 60/40 | 30 | | | | | | | | | 66.7 | |
| | | Block copolymer 4 | 20,000 | 40 | 60/40 | 25 | | | | | | | | | | 80.0 |
| | | Block copolymer 5 | 6,200 | 32 | 60/40 | 30 | | | | | | | | | | |
| | | Block copolymer 6 | 9,500 | 35 | 60/40 | 30 | | | | | | | | | | |
| | | Block copolymer 7 | 6,500 | 27 | 30/70 | 50 | | | | | | | | | | |
| | | Block copolymer 8 | 7,000 | 30 | 40/60 | 60 | | | | | | | | | | |
| | | MD2000 (polyester) | 18,000 | 67 | - | 40 | | | | | | | | | | |
| | | Superflex 300 | - | -42 | - | 30 | | | | | | | | | | |
| | | PEG2000 | 2,000 | 51-55 | - | 100 | | | | | | | | | | |
| | Solvent | Glycerin | | | | | | 10.0 | 10.0 | 10.0 | 10.0 | 10.0 | 5.0 | 0.0 | 10.0 | 10.0 |
| | | Ethylene glycol | | | | | | 25.0 | 25.0 | 25.0 | 25.0 | 10.0 | 5.0 | 20.0 | 20.0 | 5.0 |
| | Addition | Preservative | | | | | | 0.1 | 0.1 | 0.1 | 0.1 | 0.1 | 0.1 | 0.1 | 0.1 | 0.1 |
| | Ion exchange water | | | | | | | 63.2 | 31.6 | 62.0 | 36.3 | 22.8 | 4.2 | 22.8 | 3.2 | 4.9 |

(continued)

| | | Unit | Pretreatment liquid | | | | | | | | |
|---|---|---|---|---|---|---|---|---|---|---|---|
| | | | A | B | C | D | E | F | G | H | I |
| | Total | | 100.0 | 100.0 | 100.0 | 100.0 | 100.0 | 100.0 | 100.0 | 100.0 | 100.0 |
| Evaluation | Resin conc. | mass% | 1.0 | 20.0 | 2.0 | 20.0 | 40.0 | 60.0 | 40.0 | 20.0 | 20.0 |
| | Viscosity (25°C) | mPa·s | 4.4 | 6.5 | 5.0 | 7.7 | 13.0 | 13.0 | 6.5 | 8.0 | 6.5 |
| Remark | | | Present Invention | | | | | | | | |

Table 2

| | | | | | | | Unit | Pretreatment liquid | | | | | | | | |
|---|---|---|---|---|---|---|---|---|---|---|---|---|---|---|---|---|
| | | | | | | | | J | K | L | R | M | N | O | P | Q |
| Composition | Resin (Polymer) | Type | Mw | Tg (°C) | Hydrophobic/ Hydrophilic (mass ratio) | Resin conc. (mass%) | - | | | | | | | | | |
| | | Block copolymer 1 | 6,200 | 25 | 30/70 | 60 | parts by mass | | | | | | | | | |
| | | Block copolymer 2 | 2,500 | 5 | 30/70 | 70 | | | | | | | | | | |
| | | Block copolymer 3 | 9,500 | 35 | 60/40 | 30 | | | | | | | | | | |
| | | Block copolymer 4 | 20,000 | 40 | 60/40 | 25 | | | | | | | | | | |
| | | Block copolymer 5 | 6,200 | 32 | 60/40 | 30 | | 66.6 | | | | | | | | |
| | | Block copolymer 6 | 9,500 | 35 | 60/40 | 30 | | | 66.6 | | | | | | | |
| | | Block copolymer 7 | 6,500 | 27 | 30/70 | 50 | | | | 40 | | | | | | |
| | | Block copolymer 8 | 7,000 | 30 | 40/60 | 60 | | | | | 33.3 | | | | | |
| | | MD2000 (polyester) | 18,000 | 67 | - | 40 | | | | | | 50.0 | | | 30.0 | 20.0 |
| | | Superflex 300 | - | -42 | - | 30 | | | | | | | 66.6 | | | |
| | | PEG2000 | 2,000 | 51-55 | - | 100 | | | | | | | | 20.0 | 8.0 | 12.0 |
| | Solvent | Glycerin | | | | | | 10.0 | 10.0 | 10.0 | 10.0 | 10.0 | 10.0 | 10.0 | 10.0 | 10.0 |
| | | Ethylene glycol | | | | | | 20.0 | 20.0 | 20.0 | 20.0 | 20.0 | 20.0 | 20.0 | 20.0 | 20.0 |
| | Addition | Preservative | | | | | | 0.1 | 0.1 | 0.1 | 0.1 | 0.1 | 0.1 | 0.1 | 0.1 | 0.1 |
| | Ion exchange water | | | | | | | 3.3 | 3.3 | 29.9 | 36.6 | 19.9 | 3.3 | 49.9 | 31.9 | 37.9 |

(continued)

| | | Unit | Pretreatment liquid | | | | | | | | |
|---|---|---|---|---|---|---|---|---|---|---|---|
| | | | J | K | L | R | M | N | O | P | Q |
| | Total | | 100.0 | 100.0 | 100.0 | 100.0 | 100.0 | 100.0 | 100.0 | 100.0 | 100.0 |
| Evaluation | Resin conc. | mass% | 20.0 | 20.0 | 20.0 | 20.0 | 20.0 | 20.0 | 20.0 | 20.0 | 20.0 |
| | Viscosity (25°C) | mPa·s | 7.0 | 7.3 | 6.5 | 6.5 | 6.5 | 6.5 | 6.5 | 6.7 | 7.3 |
| Remark | | | Present Invention | | | | Comparative example | | | | |

2. Preparation of Ink

Preparation of Ink 1

Preparation of Dispersion Liquid

Disperbyk-190 (from BYK, Inc., acid value 10 mg KOH/g) as a dispersant and ion exchange water were stirred and mixed until uniformly mixed, and then Disperse Red 92 was added as the dispersible dye. The mixture was pre-mixed, and dispersed until the Z-average particle diameter, measured by the dynamic light scattering method, fell within the range of 150 to 200 nm, thereby preparing a dispersion liquid having the concentration of the dispersible dye of 20 mass%. During the preparation, the amounts of dispersant, ion exchange water, and dispersible dye were adjusted in such a way that the content of the dispersible dye was 20 mass% based on the total mass of the dispersant, and the amount of the solid content of the dispersant was 30 mass% based on the total mass of the dispersible dye. The measurement of Z-average particle dismeter by dynamic light scattering method was performed by using Zetasizer 1000 from Malvern Instruments Ltd. ("Zetasizer" is a registered trademark of the company) in a sand grinder filled with 0.5 mm zirconia beads at a volume fraction of 50%.

Preparation of Ink

Ink 1 (magenta dispersed ink) was obtained by the following process: 30 mass% of the obtained dispersion liquid, 10 mass% of glycerin and 25 mass% of ethylene glycol as solvents, 0.1% by mass of Proxel GXL as a preservative, and an appropriate amount of sodium citrate hydrate as a pH adjuster were added. After ion exchange water was added to the mixture so as to have a total of 100 mass% and mixed, the mixture was filtered through a 1 μm mesh filter to obtain ink 1 (magenta dispersion ink).

Preparation of Ink 2

Ink 2 (magenta sublimation ink) was obtained in the same manner as ink 1 except that Disperse Red 60 was used as the dispersible dye.

3. Image Formation and Evaluation

Tests 1 to 24

(1) Pretreatment

The following fabrics were prepared.

Fabric 1: Cotton broadcloth 40 (100% cotton)
Fabric 2: T/C broadcloth (65% polyester, 35% cotton)

Then, a pretreatment liquid with the type and applied amount shown in Table 3 was applied to the surface of a fabric shown in the same table by a method shown in the same table, and dried at 110°C for 3 minutes to obtain a pretreated fabric.

The application of the pretreatment liquid was performed by the spray method, the mangle method, or the inkjet method, as described above. The spray method was performed by applying the pretreatment liquid with an accumulator spray and using a blade for leveling the pretreatment liquid. The mangle method (dipping method) was performed by immersing the fabric in a bath filled with the pretreatment liquid and then squeezing the excess pretreatment liquid with a mangle roll. The temperature of the pretreatment liquid in the bath was 20 to 25°C. The inkjet method was performed by using an inkjet head printer described below under the same conditions as for the ink.

(2) Application of Ink to Transfer Paper

As an image forming apparatus, an inkjet printer including an inkjet head (printhead KM1024iMAE from Konica Minolta, Inc.) was prepared. Then, an ink shown in Table 3 was ejected from the nozzle of the above inkjet head to form a solid image on A4 sublimation transfer paper with glue (from SystemGraphi Co., Ltd.) as transfer paper. Specifically, an image including a fine line grid, a gradation, and a solid portion (200 mm × 200 mm in total) was formed by a main scan of 540 dpi × a sub scan of 720 dpi. The "dpi" represents the number of ink droplets (dots) per 2.54 cm. The ejection

frequency was 22.4 kHz. Then, the transfer paper including the ink applied thereon was dried in a dryer at 50 to 80°C for 30 seconds.

(3) Transfer of Ink onto Fabric

The transfer paper with ink (ink layer) applied thereon was then heat-pressed at 200°C for 50 seconds with a press pressure of 300g/$cm^2$ by using a transfer device (heat press machine), thereby transferring the ink on the transfer paper onto a pretreated fabric to obtain an image-formed product.

Tests 25 to 27

Image formation was performed in the same manner as in Tests 13 to 15, except that direct textile printing was performed in place of transfer textile printing using transfer paper.

That is, an image-formed product was obtained in the same manner as in Tests 13 to 15, except that each ink shown in Table 3 was ejected from the nozzle of the above inkjet head to form a solid image directly on the pretreated fabric.

Evaluation

The image-formed products obtained in Tests 1 to 27 were evaluated for image density, texture and fixability by the following methods.

Image Density

The image density was evaluated by performing measurement by a spectrocolorimeter (from X-Rite Inc.), and calculating the K/S value. The K/S value is an index of surface color density defined by the following equation:

$$\text{Kubelka-Munk equation: } K/S = (1 - R)^2 / 2S$$

where K is light absorption coefficient, S is light scattering coefficient, and R is surface reflectance.

The larger the K/S value, the higher the color density, and the smaller the K/S value, the lower the color density.

The K/S value when the image was formed in the same manner on 100% polyester fabric (polyester fabric) was also calculated, and each test was evaluated relative to the K/S value of the polyester fabric (relative K/S value). The evaluation was made based on the following evaluation criteria.

5: Relative K/S value is 100% or more (with respect to polyester)
4: Relative K/S value is 80% or more and less than 100% (with respect to polyester)
3: Relative K/S value is 60% or more and less than 80% (with respect to polyester)
2: Relative K/S value is 40% or more and less than 60% (with respect to polyester)
1: Relative K/S value is less than 40% (with respect to polyester), and K/S value does not change regardless of the presence or absence of pretreatment

When the evaluation was 2 or more, the image density was evaluated as in an allowable range.

Texture

The texture of an obtained image-formed product and fabric was evaluated sensorily by touching with fingers. The evaluation was made based on the following evaluation criteria.

5: Original softness of the fabric was maintained, which was substantially the same as before image formation
4: Slightly harder than before image formation, but the texture of the fabric is unimpaired at a level posing no problem in practical use
3: Slightly harder than before image formation, and texture of the fabric has slightly changed, but at a level posing no problem in practical use
2: A little harder than before image formation, and the texture of the fabric has changed a little, but at a level posing no problem in practical use
1: Harder than before image formation, and the texture of the fabric is substantially impaired at a level posing a problem in practical use

When the evaluation was 2 or more, the texture was evaluated as in an allowable range.

Fixability

Fixability was evaluated by test methods for color fastness to dry rubbing (JIS L-0849) with a crockmeter. The evaluation was made based on the following evaluation criteria.

5: No staining on the white cloth for abrasion and no color fading on the test cloth
4: Slight staining on the white cloth for abrasion, but no color fading on the test cloth
3: Slight staining on the white cloth for abrasion, and color on the test cloth is slightly faded, but at a level posing no problem in practical use
2: Staining on the white cloth for abrasion, and color on the test cloth is slightly faded, but at a level posing no problem in practical use
1: Staining on the white cloth for abrasion, and color on the test cloth is faded at a level posing a problem in practical use

When the evaluation was 2 or more, the fixability was evaluated as in an allowable range.
Table 3 shows the evaluation results of Tests 1 to 27.

Table 3

| Test No. | Fabric | Pretreatment | | | | | Ink | | Evaluation | | | Remark |
|---|---|---|---|---|---|---|---|---|---|---|---|---|
| | | Type | Resin conc. (Mass%) | Application method | Pretreatment liquid applied amount ($g/m^2$) | Resin applied amount ($g/m^2$) | Type | Application method | Image density | Texture | Fixability | |
| 1 | Fabric 1 | A | 1.0 | Spray | 300 | 3 | Ink 1 | Transfer | 2 | 5 | 4 | PI |
| 2 | Fabric 1 | B | 20.0 | Mangle | 100 | 20 | Ink 1 | Transfer | 4 | 4 | 4 | PI |
| 3 | Fabric 1 | C | 2.0 | Spray | 300 | 6 | Ink 1 | Transfer | 3 | 5 | 4 | PI |
| 4 | Fabric 1 | D | 20.0 | Mangle | 100 | 20 | Ink 1 | Transfer | 4 | 5 | 4 | PI |
| 5 | Fabric 1 | E | 40.0 | Mangle | 100 | 40 | Ink 1 | Transfer | 4 | 5 | 4 | PI |
| 6 | Fabric 1 | F | 60.0 | Mangle | 100 | 60 | Ink 1 | Transfer | 3 | 5 | 4 | PI |
| 7 | Fabric 1 | G | 40.0 | Mangle | 100 | 40 | Ink 1 | Transfer | 5 | 5 | 4 | PI |
| 8 | Fabric 1 | H | 20.0 | Mangle | 100 | 20 | Ink 1 | Transfer | 3 | 3 | 3 | PI |
| 9 | Fabric 1 | I | 20.0 | Mangle | 100 | 20 | Ink 1 | Transfer | 3 | 2 | 4 | PI |
| 10 | Fabric 1 | J | 20.0 | Mangle | 100 | 20 | Ink 1 | Transfer | 3 | 4 | 3 | PI |
| 11 | Fabric 1 | K | 20.0 | Mangle | 100 | 20 | Ink 1 | Transfer | 3 | 3 | 3 | PI |
| 12 | Fabric 1 | L | 20.0 | Mangle | 100 | 20 | Ink 1 | Transfer | 4 | 4 | 4 | PI |
| 13 | Fabric 1 | F | 60.0 | IJ | 45 | 27 | Ink 1 | Transfer | 5 | 5 | 4 | PI |

(continued)

| Test No. | Fabric | Pretreatment | | | | | Ink | | Evaluation | | | Remark |
|---|---|---|---|---|---|---|---|---|---|---|---|---|
| | | Type | Resin conc. (Mass%) | Application method | Pretreatment liquid applied amount (g/m$^2$) | Resin applied amount (g/m$^2$) | Type | Application method | Image density | Texture | Fixability | |
| 14 | Fabric 1 | F | 60.0 | IJ | 45 | 27 | Ink 2 | Transfer | 5 | 5 | 4 | PI |
| 15 | Fabric 2 | F | 60.0 | IJ | 45 | 27 | Ink 1 | Transfer | 5 | 5 | 4 | PI |
| 16 | Fabric 2 | F | 60.0 | IJ | 45 | 27 | Ink 2 | Transfer | 5 | 5 | 4 | PI |
| 17 | Fabric 1 | None | - | - | 0 | 0 | Ink 1 | Transfer | 1 | 5 | 4 | Comp. |
| 18 | Fabric 2 | None | - | - | 0 | 0 | Ink 1 | Transfer | 1 | 5 | 4 | Comp. |
| 19 | Fabric 1 | M | 20.0 | Spray | 150 | 30 | Ink 1 | Transfer | 3 | 1 | 5 | Comp. |
| 20 | Fabric 1 | N | 20.0 | Spray | 150 | 30 | Ink 1 | Transfer | 1 | 2 | 3 | Comp. |
| 21 | Fabric 1 | O | 20.0 | Spray | 150 | 30 | Ink 1 | Transfer | 1 | 4 | 5 | Comp. |
| 22 | Fabric 1 | P | 20.0 | Spray | 150 | 30 | Ink 1 | Transfer | 3 | 1 | 5 | Comp. |
| 23 | Fabric 1 | Q | 20.0 | Spray | 150 | 30 | Ink 1 | Transfer | 3 | 1 | 5 | Comp. |
| 24 | Fabric 1 | R | 20.0 | Mangle | 100 | 20 | Ink 1 | Transfer | 4 | 4 | 3 | PI |
| 25 | Fabric 1 | F | 60.0 | IJ | 45 | 27 | Ink 1 | Direct | 5 | 4 | 3 | PI |
| 26 | Fabric 1 | F | 60.0 | IJ | 45 | 27 | Ink 2 | Direct | 5 | 4 | 3 | PI |

(continued)

| Test No. | Fabric | Pretreatment | | | | | Ink | | Evaluation | | | Remark |
|---|---|---|---|---|---|---|---|---|---|---|---|---|
| | | Type | Resin conc. (Mass%) | Application method | Pretreatment liquid applied amount ($g/m^2$) | Resin applied amount ($g/m^2$) | Type | Application method | Image density | Texture | Fixability | |
| 27 | Fabric 2 | F | 60.0 | IJ | 45 | 27 | Ink 1 | Direct | 5 | 4 | 3 | PI |

Transfer: Transfer textile printing, Direct: Direct textile printing, PI: Present invention, Comp.: Comparative example

As shown in Table 3, all the image-formed products (in the present invention) of Tests 1 to 16 and 24 to 27, which use a pretreatment liquid containing a predetermined block copolymer, have excellent ink fixability, and also have satisfactory image density and texture.

Table 3 also shows that the image-formed products of Tests 17 and 18, which use a pretreatment liquid containing no predetermined block copolymer, make it difficult for the dispersible dye to permeate and fix to a fabric due to the absence of the block copolymer, resulting in low image density. Table 3 further shows, in Tests 20 and 21, which use a pretreatment liquid containing polyester resin particles, the polyester resin particles themselves had low affinity to the cotton fabric, so the polyester resin particles did not bind to the fabric sufficiently, making it difficult for the dispersive dye to permeate, resulting in low image density. Tests 22 and 23, in which polyester resin is mixed with polyalkylene oxide, show that the texture is reduced.

The present invention provides a pretreatment liquid capable of forming an image with high density and satisfactory fixability even on a fabric containing a hydrophilic fiber such as a natural fiber without impairing the texture of the fabric by using a dispersible dye.

Although embodiments of the present invention have been described and illustrated in detail, it is clearly understood that the same is by way of illustration and example only and not limitation, the scope of the present invention should be interpreted by terms of the appended claims.

## Claims

1. A pretreatment liquid for a fabric to be dyed with an inkjet ink containing a dispersible dye, the pretreatment liquid comprising:

    a block copolymer including a hydrophobic block derived from a hydrophobic resin having an SP value of less than 11, and a hydrophilic block derived from a hydrophilic resin having an SP value of 11 or more, wherein a difference between the SP values of the hydrophobic resin and the hydrophilic resin is 1.0 or more; and
    water.

2. The pretreatment liquid according to claim 1, wherein:
the hydrophobic resin is polyester.

3. The pretreatment liquid according to claim 1 or 2, wherein:
a glass transition temperature or a melting point of the block copolymer is less than 30°C.

4. The pretreatment liquid according to any one of claims 1 to 3, wherein:
on a mass basis, a content of the hydrophilic block is higher than a content of the hydrophobic block in the block copolymer.

5. The pretreatment liquid according to claim 4, wherein:
the content of the hydrophilic block is 60 to 95 mass% based on a total content of the hydrophobic block and the hydrophilic block.

6. The pretreatment liquid according to any one of claims 1 to 5, wherein:

    a weight average molecular weight of the hydrophobic block is 500 to 10,000; and
    a weight average molecular weight of the hydrophilic block is 500 to 6,000.

7. The pretreatment liquid according to any one of claims 1 to 6, wherein:
a weight average molecular weight of the block copolymer is 1,000 to 30,000.

8. The pretreatment liquid according to any one of claims 1 to 7, wherein:
the hydrophilic resin is polyalkylene oxide.

9. The pretreatment liquid according to any one of claims 1 to 8, wherein:
the block copolymer does not include a urethane bond.

10. The pretreatment liquid according to any one of claims 1 to 9, wherein:
a content of the block copolymer is 2 to 60 mass% with respect to the pretreatment liquid.

**11.** A pretreated fabric to be subjected to an application of an inkjet ink containing a dispersible dye, the pretreated fabric being obtained by pretreating at least a surface of a fabric, the pretreated fabric comprising:
a block copolymer including a hydrophobic block derived from a hydrophobic resin having an SP value of less than 11, and a hydrophilic block derived from a hydrophilic resin having an SP value of 11 or more, wherein a difference between the SP values of the hydrophobic resin and the hydrophilic resin is 1.0 or more.

**12.** The pretreated fabric according to claim 11, wherein:
the hydrophobic resin is polyester.

**13.** The pretreated fabric according to claim 11 or 12, wherein:
the fabric contains a natural fiber.

**14.** A method for producing a pretreated fabric, the method comprising:
applying the pretreatment liquid according to any one of claims 1 to 10 to at least a surface of a fabric.

**15.** The method according to claim 14, wherein:
the fabric contains a natural fiber.

**16.** An ink set, comprising:
the pretreatment liquid according to any one of claims 1 to 10; and an inkjet ink containing a dispersible dye.

**17.** An image forming method, comprising:

1) preparing a pretreated fabric that contains a block copolymer including a hydrophobic block derived from a hydrophobic resin having an SP value of less than 11 and a hydrophilic block derived from a hydrophilic resin having an SP value of 11 or more, at least a surface of the pretreated fabric being pretreated, wherein a difference between the SP values of the hydrophobic resin and the hydrophilic resin is 1.0 or more; and
2) applying an ink layer containing a dispersible dye to a treated surface of the pretreated fabric.

**18.** The image forming method according to claim 17, wherein:
the pretreated fabric contains a natural fiber.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019090149 A
- WO 2016027835 A


### Non-patent literature cited in the description


- **D. A. SMALL.** *J. Appl. Chem.,* 1953, vol. 3, 71
- **K. L. HOY.** *J. Paint Technol.,* 1970, vol. 42, 76
- *CHEMICAL ABSTRACTS,* 10191-18-1